# FASCICULE DE BREVET EUROPEEN

(11) **EP 2 292 482 B1**
(45) Date de publication et mention de la délivrance du brevet: **28.03.2012**
(21) Numéro de dépôt: 10172451.6
(22) Date de dépôt: 11.08.2010
(51) Int. Cl.: B60T 13/52, F16L 41/00

(54) **Servomoteur avec indexation du raccord de vide**
Bremskraftverstärker mit Vakuumanschluss
Brake booster having a vacuum connector

(30) Priorité: 07.09.2009 FR 0904281
(43) Date de publication de la demande: 09.03.2011
(73) Titulaire: Robert Bosch GmbH, 70442 Stuttgart (DE)
(72) Inventeur: Aquino, Serge, 93110, ROSNY SOUS BOIS (FR); Ferreira, Rui, 91310, LINAS (FR); Thelliez, Christophe, 94120 Fontenay sous Bois (FR); Duterne, Arnaud, 94500, CHAMPIGNY (FR); Duchossoy, Christophe, 95270, VIARNES (FR)
(74) Mandataire: Hurwic, Aleksander Wiktor

(56) Documents cités:
- EP-A2- 0 342 326
- DE-A1- 10 351 314
- FR-A1- 2 859 010

## Description

La présente invention a trait à un servomoteur pneumatique d'assistance de freinage, disposé au sein d'un véhicule automobile. Elle concerne plus précisément un agencement pour le raccordement d'une chambre de dépression d'un servomoteur à un conduit souple de dépression, relié à une source de dépression du véhicule automobile.

Un dispositif d'assistance pneumatique tel un servomoteur comporte notamment une chambre avant à volume variable, séparée d'une chambre arrière, également à volume variable, par une cloison formée par une membrane étanche et souple et par une jupe rigide. La jupe rigide entraîne un piston pneumatique prenant appui sur un piston primaire du maître cylindre d'un circuit hydraulique de freinage.

Le maître cylindre est monté sur l'ensemble constitué de la chambre avant et de la chambre arrière. En pratique, le maître cylindre traverse une paroi externe de la chambre avant. Le maître cylindre passe par un orifice situé dans une partie centrale de ladite paroi de la chambre avant. Le maître cylindre est fixé sur ladite paroi de la chambre avant, notamment par l'intermédiaire de vis.

La chambre avant est reliée à une source de dépression du véhicule automobile. De manière classique, la liaison de la chambre avant avec une telle source de dépression est effectuée par un conduit souple, ledit conduit s'adaptant sur un raccord de vide reçu dans une paroi de la chambre avant du servomoteur.

Un tel raccord de vide se présente typiquement comme un élément de forme coudée **dont un exemple est décrit dans** FR2859010. Cet élément comporte une première buse tubulaire, située dans une position sensiblement axiale par rapport à un axe principal du servomoteur. Ladite première buse tubulaire traverse une paroi dudit servomoteur. Ladite première buse tubulaire est reçue dans un orifice de ladite paroi, ledit orifice étant classiquement muni d'un joint d'étanchéité en matériau souple.

L'élément coudé comporte une seconde buse tubulaire, reliée à la première buse. La seconde buse est située à l'extérieur du servomoteur afin d'être raccordée au conduit souple de dépression.

La seconde buse est située dans une position sensiblement transversale, par rapport à un axe principal du servomoteur. Lorsque le raccord de vide est monté dans la paroi du servomoteur sans précaution particulière, la position angulaire de la seconde buse n'est pas déterminée précisément.

Or, cette position angulaire doit permettre un raccordement au conduit souple de dépression, ledit conduit étant positionné de manière à ne pas interférer avec un quelconque organe mécanique du véhicule dans lequel est monté le servomoteur.

Par exemple, si le conduit souple est positionné près d'un organe mécanique soumis à une température élevée, cette température risque de détériorer le matériau dudit conduit souple. Cela entraînerait une fuite dans le système de dépression du servomoteur, d'où un dysfonctionnement dudit servomoteur.

Lors du montage du raccord de vide dans la paroi du servomoteur, il est donc important d'ajuster, de manière relativement précise, l'orientation de la seconde buse.

Il est connu d'utiliser un premier moyen d'indexation angulaire du raccord de vide, ledit moyen d'indexation coopérant avec une partie du maître cylindre. Plus précisément, le raccord de vide est fixé à une extrémité d'une patte d'indexation, située à l'extérieur du servomoteur. L'angle formé par la seconde buse et la patte d'indexation est prédéterminé, permettant d'orienter ladite buse de manière optimale pour le raccordement du tuyau de dépression.

Une autre extrémité de la patte d'indexation est reliée à une partie du maître cylindre, ladite partie étant extérieure au servomoteur et située proche d'une paroi dudit servomoteur.

Il est notamment connu de tirer parti d'un élément de fixation, tel qu'une vis, du maître cylindre à une paroi du servomoteur. Une extrémité de la patte d'indexation est munie d'un orifice, qui s'adapte sur une tête de vis de fixation du maître cylindre.

Certaines contraintes de montage peuvent imposer l'existence d'un jeu entre la tête de vis et l'orifice de la patte d'indexation. Ce jeu rend possible une rotation du raccord de vide autour d'un axe de la première buse tubulaire, qui traverse la paroi du servomoteur. L'orientation de la seconde buse peut donc varier d'un certain angle, qui dépend de la taille du jeu entre la tête de vis et l'orifice de la patte d'indexation.

L'invention permet de résoudre ce problème, par l'intermédiaire d'un élément d'indexation fine. Après le montage du raccord de vide et de la patte d'indexation sur le servomoteur, un tel élément d'indexation fine est inséré entre l'élément de fixation du maître cylindre et l'orifice de la patte d'indexation. L'élément d'indexation fine a une forme telle qu'il occupe sensiblement la totalité du jeu autorisant la rotation du raccord de vide. Ainsi, ce jeu est supprimé et l'orientation angulaire de la seconde buse est fixée avec précision.

La présente invention se rapporte donc à un servomoteur pneumatique d'assistance de freinage, relié à une source de dépression d'un véhicule automobile, comportant : au moins une paroi, un maître cylindre traversant la paroi et fixé à ladite paroi par au moins un élément de fixation, un raccord de vide de forme coudée, comportant une première buse tubulaire et une seconde buse tubulaire, la première buse, orientée sensiblement axialement par rapport à un axe principal du servomoteur étant reçue dans un orifice de la paroi, la seconde buse étant située à l'extérieur du servomoteur, orientée sensiblement transversalement par rapport à un axe principal du servomoteur, ledit servomoteur comportant également un premier moyen d'indexation du raccord de vide, dont une extrémité est fixée au raccord de vide selon un angle prédéterminé, dont une autre extrémité comporte un orifice qui reçoit une partie d'un élément de fixation du maître cylindre à la paroi, un jeu existant entre ledit orifice du premier moyen d'indexation et ladite partie de l'élément de fixation, ledit jeu permettant une rotation du raccord de vide autour d'un axe de la première buse tubulaire,
ledit servomoteur étant caractérisé en ce qu'un élément d'indexation fine est inséré entre ledit orifice du premier moyen d'indexation et ladite partie de l'élément de fixation, ledit élément d'indexation fine occupant sensiblement la totalité du jeu permettant la rotation du raccord de vide.

Selon une forme préférentielle de l'invention, dans un plan perpendiculaire à l'axe du servomoteur, l'élément d'indexation fine a une forme circulaire, son rayon étant sensiblement égal à une plus petite dimension, dans ledit plan, de l'orifice du premier moyen d'indexation.

Selon une forme préférentielle de l'invention, l'orifice du premier moyen d'indexation a une forme circulaire ou oblongue.

Selon une forme préférentielle de l'invention, l'élément d'indexation fine comporte un orifice dont au moins une partie du bord a une forme complémentaire d'une partie de l'élément de fixation du maître cylindre.

Selon une forme préférentielle de l'invention, l'orifice de l'élément d'indexation fine est centré par rapport à un centre d'une face dudit élément d'indexation fine.

Selon une forme préférentielle de l'invention, dans un plan perpendiculaire à l'axe du servomoteur, l'élément de fixation du servomoteur a une forme polygonale, complémentaire de la forme de l'orifice de l'élément d'indexation fine.

L'invention se rapporte également à un procédé de montage d'un servomoteur tel que décrit ci-dessus, comportant les étapes suivantes :
- insertion de la première buse tubulaire du raccord de vide dans la paroi du servomoteur ;
- adaptation de l'orifice de l'extrémité du premier moyen d'indexation sur un élément de fixation du maître cylindre ;
- après ladite adaptation, insertion d'un élément d'indexation fine entre l'élément de fixation et les bords de l'orifice du premier moyen d'indexation.

L'invention sera mieux comprise à la lecture de la description qui suit et à l'examen des figures qui l'accompagnent. Celles-ci sont présentées à titre indicatif et nullement limitatif de l'invention.

Les figures montrent :
- Figure 1 : une vue en coupe axiale d'un servomoteur selon l'état de la technique,
- Figure 2 : une vue détaillée, en coupe transversale d'un servomoteur selon l'état de la technique
- Figure 3 : une vue détaillée d'un servomoteur selon l'invention,

Les références ci-dessous sont utilisées dans les figures suivantes :
1 - Servomoteur
2 - Maître cylindre
3 - Tige de commande
4 - Piston pneumatique
5 - Boîtier
6 - Couvercle
7 - Cylindre
8 - Chambre arrière
9 - Chambre avant
10 - Membrane
11 - Jupe rigide
12 - Conduit souple
13 - Raccord de vide
14 - Orifice du cylindre 7
15 - Joint d'étanchéité
16 - Première buse du raccord 13
17 - Axe principal du servomoteur 1
18 - Seconde buse du raccord 13
19 - Axe de la première buse 16
20 - Elément de fixation du maître cylindre 2 sur le cylindre 7
21 - Patte d'indexation
22 - Partie de la patte 21 d'indexation
23 - Partie de la patte 21 d'indexation
24 - Extrémité de la partie 22
25 - Extrémité de la partie 23
26 - Orifice de l'extrémité 25
27 - Jeu entre l'orifice 26 et l'élément 20
28 - Dimension de l'orifice 26
29 - Dimension de l'élément 20
30 - Elément d'indexation fine
31 - Orifice de l'élément 30

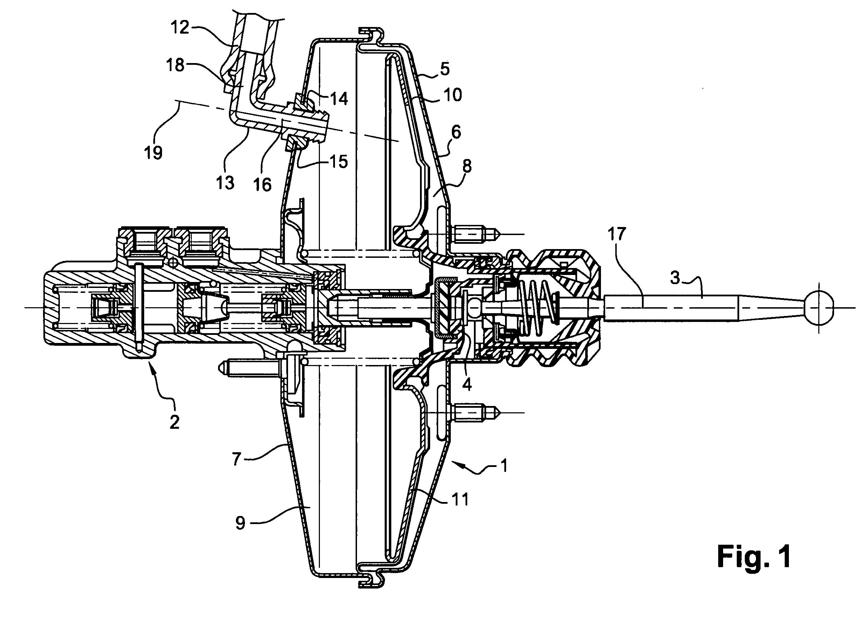

La figure 1 représente une vue en coupe axiale d'un servomoteur selon l'état de la technique. Le servomoteur 1 est fixé solidairement à un maître cylindre 2, par des moyens de fixation non représentés sur la figure 1. Une tige de commande 3 actionne un piston pneumatique 4 du servomoteur 1. La tige de commande 3 est reliée directement ou indirectement à une commande de frein. Le piston pneumatique 4 se déplace à l'intérieur d'un boîtier 5 du servomoteur 1. Ledit boîtier 5 comporte notamment deux parois, respectivement un couvercle 6 et un cylindre 7. Une chambre arrière 8 du servomoteur 1 est séparée d'une chambre avant 9 par une membrane 10 étanche et souple et une plaque jupe 11 rigide. La chambre avant 9 est située côté maître cylindre 2. La chambre arrière 8 est située côté tige de commande 3.

La chambre arrière 8 est susceptible d'être reliée à la pression atmosphérique. La chambre avant 9 est reliée pneumatiquement à une source de dépression. La liaison de la chambre avant 9 avec une telle source de dépression est effectuée par un conduit 12 souple, ledit conduit 12 s'adaptant sur un raccord 13 de vide. Ledit raccord 13 est reçu dans une paroi de la chambre avant 9 du servomoteur, plus précisément dans le cylindre 7.

Le raccord 13 de vide est reçu dans un orifice 14, pratiqué dans le cylindre 7. Ledit orifice 14 est muni d'un joint 15 d'étanchéité, formé d'un matériau souple.

Le raccord 13 de vide est de forme coudée. Il comporte une première buse 16 tubulaire, sensiblement située dans une position axiale par rapport à un axe principal 17 du servomoteur. Ladite première buse tubulaire traverse le cylindre 7 en passant par l'orifice 14 et le joint 15 d'étanchéité.

Le raccord 13 de vide comporte une seconde buse 18 tubulaire, reliée à la première buse 16 et formant un coude avec ladite première buse 16. Afin d'être raccordée au conduit 12 souple de dépression, la seconde buse 18 est située à l'extérieur du servomoteur 1, plus précisément à l'extérieur du boîtier 5.

La seconde buse 18 est située dans une position sensiblement transversale, par rapport à l'axe 17 du servomoteur. Sur la figure 1, la seconde buse 18 est représentée dans le plan de coupe. Cependant, le raccord 13 de vide est mobile en rotation autour d'un axe 19 de la première buse 16. La position angulaire de la seconde buse 18, dans un plan perpendiculaire à l'axe 19, varie lorsque se produit une telle rotation du raccord 13 de vide.

Lorsque le raccord 13 de vide est monté dans le cylindre 7 sans précaution particulière, la position angulaire de la seconde buse 18 dans un plan perpendiculaire à l'axe 19 est donc aléatoire. Or, cette position angulaire doit permettre un raccordement au conduit 18 souple de dépression, de manière à écarter ledit conduit d'une interférence avec un organe mécanique du véhicule dans lequel est monté le servomoteur. Il est donc important d'optimiser la position de la seconde buse 18.

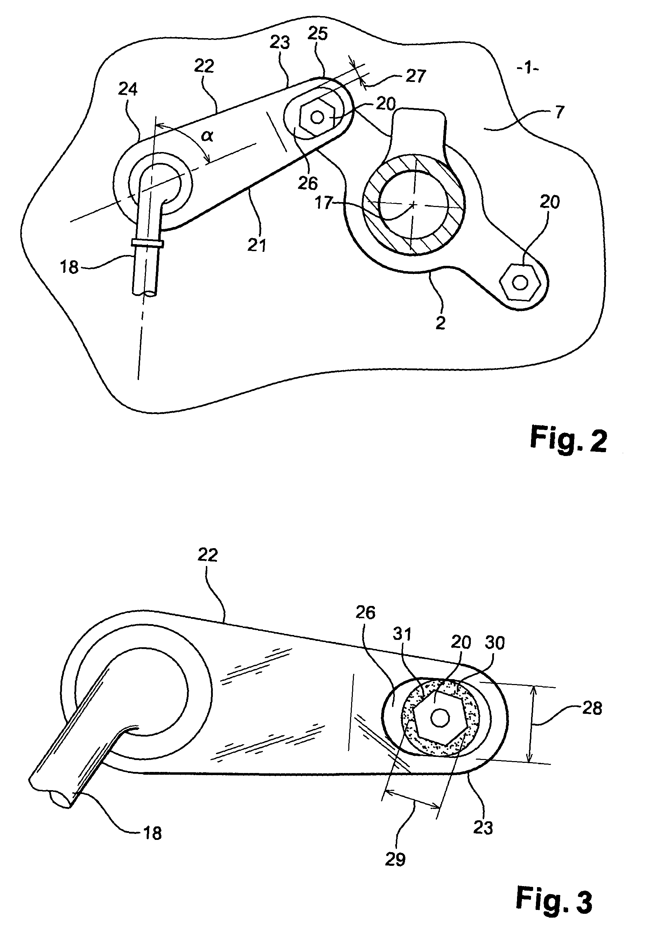

Ce problème est partiellement résolu par le dispositif représenté sur la figure 2. La figure 2 représente une vue détaillée, en coupe transversale, d'un servomoteur 1. Le plan de coupe est situé extérieurement au boîtier 5, du côté du maître cylindre 2. Le maître cylindre est fixé solidairement au cylindre 7 par des éléments 20 de fixation. Dans l'exemple représenté à la figure 2, les éléments 20 sont des vis à tête polygonale, plus précisément hexagonale.

On observe également la seconde buse 18 du raccord 13 de vide. Le raccord 13 est muni d'un moyen 21 d'indexation angulaire de ladite seconde buse 18 dans un plan perpendiculaire à l'axe 19 (voir figure 1). Plus précisément, le raccord 13 est muni d'une patte 21 d'indexation.

Ladite patte 21 d'indexation est composée de deux parties (22, 23). Une partie 22 est située dans un plan perpendiculaire à l'axe 19 de la première buse 16. Une partie 23 est située dans un plan perpendiculaire à l'axe 17 du servomoteur 1. Typiquement, les parties (22, 23) sont légèrement inclinées l'une par rapport à l'autre, de même que les axes (17, 19).

Une extrémité 24 de la partie 22 de la patte 21 d'indexation est fixée solidairement au raccord 13 de vide, par exemple par collage, soudage ou emboîtement élastique. Un angle α entre la partie 22 et la seconde buse 18 est déterminé lors de l'assemblage desdites pièces, de manière à assurer une orientation optimale de la seconde buse 18.

Ladite orientation est assurée en reliant une extrémité de la partie 23 de la patte 21 à un élément fixe du servomoteur. En l'occurrence, une extrémité 25 de la partie 23 de la patte 21 est reliée à un élément 20 de fixation du maître cylindre 2 sur le cylindre 7.

Plus précisément, l'extrémité 25 de la partie 23 est munie d'un orifice 26. Cet orifice 26 s'adapte sur un élément 20 de fixation, plus précisément sur une tête de vis hexagonale. L'angle α entre la partie 22 et la seconde buse 18 est choisi en fonction de la position dudit élément 20 par rapport au raccord 13 de vide et en fonction de l'orientation recherchée de la seconde buse 18.

Afin de faciliter le montage de la patte 21 sur l'élément de fixation, l'orifice 26 est de forme oblongue. Par forme oblongue, on entend une forme correspondant à deux demi-cercles identiques, accolés, de part et d'autre, à un rectangle, le diamètre des demi-cercles étant égal à la longueur des côtés du rectangle leur étant accolés.

Afin que l'orifice 26 puisse s'adapter sur les têtes hexagonales des éléments 20, il convient que le diamètre desdits demi-cercles soit au moins égal au diamètre d'un cercle circonscrit de l'hexagone. Par cercle circonscrit, on entend un cercle de diamètre égal à la distance entre deux sommets opposés de l'hexagone.

Lors de l'assemblage de la patte 21 et d'un élément 20 de fixation, il est possible que deux sommets opposés de l'hexagone touchent chacun un bord de l'orifice 26. L'ensemble patte 21 / raccord 13 de vide est alors fixe en rotation par rapport à l'axe 19 de la première buse 16.

Cependant, la position angulaire de la tête des vis 20 est aléatoire. Comme représenté sur la figure 2, il arrive donc qu'un jeu 27 existe entre l'orifice 26 et la tête de vis 20 sur laquelle est emboîté ledit orifice 26.

Ce jeu 27 autorise une rotation de l'ensemble patte 21 / raccord 23 de vide autour de l'axe 19 de la première buse 16. L'angle de rotation possible est relativement faible ; toutefois, il génère un manque de précision dans l'indexation angulaire de la seconde buse 18, ce manque de précision pouvant s'avérer gênant.

Ce problème est résolu par la présente invention, dont une forme de réalisation est représentée à la figure 3.

Sur la figure 3, on distingue la seconde buse 18 du raccord 13 de vide. Le raccord 13 est muni d'une patte 21 d'indexation, qui comporte deux parties (22, 23). Une extrémité de la partie 22 est fixée solidairement au raccord 13 de vide. Une extrémité de la partie 23 comporte un orifice 26 qui s'adapte sur un élément 20 de fixation du maître cylindre sur le cylindre. En ce qui concerne les éléments précités, le dispositif représenté sur la figure 3 est similaire à celui représenté sur la figure 2.

Comme la figure 2, la figure 3 représente une vue détaillée d'un servomoteur 1 selon un plan perpendiculaire à l'axe 17 principal du servomoteur. La partie 23 de la patte 21 d'indexation est sensiblement située dans un plan perpendiculaire à l'axe 17.

La partie 23 comporte un orifice 26. Comme sur la figure 2, cet orifice est de forme oblongue, afin de faciliter le montage de la partie 23 sur l'élément 20 de fixation. Cet élément 20 est une vis à tête hexagonale. Dans l'exemple représenté à la figure 3, le diamètre 28 des demi-cercles formant l'oblong est supérieur à la distance 29 entre deux sommets opposés de la tête hexagonale de la vis 20. Ainsi, quelle que soit la position de la tête de la vis 20, un jeu existe entre ladite tête et les bords de l'orifice 26.

Afin de supprimer ce jeu, qui donne une incertitude sur l'orientation de la buse 18, un élément 30 d'indexation fine est emboîté entre la tête de vis 20 et l'orifice 26. Cet élément 30 occupe sensiblement la totalité du jeu entre la tête de la vis 20 et l'orifice 26. Plus précisément, dans l'exemple représenté à la figure 3, une dimension 28 de l'élément 30, dans un plan perpendiculaire à l'axe 17, est sensiblement égale à la plus petite dimension 28 de l'orifice 26 dans ledit plan.

L'élément 30 d'indexation fine comporte un orifice 31. Afin de supprimer le jeu entre la tête de vis 20 et l'orifice 26, il convient qu'au moins une partie du bord de l'orifice 31 ait une forme complémentaire d'une partie de la vis 20. Dans l'exemple représenté à la figure 3, l'orifice 31 a une forme hexagonale, complémentaire de la forme de la tête de la vis 20.

Préférentiellement, l'élément 30 a la forme d'un cylindre, dont une base est située dans un plan perpendiculaire à l'axe 17. Plus préférentiellement, comme représenté à la figure 3, ladite base a une forme circulaire, de diamètre 28 égal à la plus petite dimension 28 de l'orifice 26 dans ledit plan.

Cette forme circulaire permet d'emboîter l'élément 30 entre la tête de vis 20 et l'orifice 26, quelle que soit la position angulaire de la tête hexagonale de la vis 20.

Préférentiellement, l'orifice 31 est centré par rapport à la base circulaire de l'élément 30. Ainsi, la position finale de la patte 21 d'indexation ne dépend pas de la position angulaire de la tête hexagonale de la vis 20.

Préférentiellement, l'élément 30 est réalisé dans un matériau légèrement déformable, comme un matériau plastique, afin de faciliter son emboîtement entre la tête de la vis 20 et la partie 23 de la patte 21 d'indexation.

Grâce à l'élément 30 inséré entre la tête de la vis 20 et l'orifice 26 de la patte 21 d'indexation, il n'est plus possible au raccord 13 de vide d'effectuer une rotation autour de l'axe 19 de la première buse 16. L'orientation de la seconde buse 18 est donc déterminée avec une grande précision.

## Revendications

1. Servomoteur (1) pneumatique d'assistance de freinage, relié à une source de dépression d'un véhicule automobile, comportant :
- au moins une paroi (7),
- un maître cylindre (2) traversant la paroi (7) et fixé à ladite paroi par au moins un élément (20) de fixation,
- un raccord (13) de vide de forme coudée, comportant une première buse (16) tubulaire et une seconde buse (18) tubulaire,
la première buse, orientée sensiblement axialement par rapport à un axe (17) principal du servomoteur étant reçue dans un orifice (14) de la paroi (7),
la seconde buse étant située à l'extérieur du servomoteur, orientée sensiblement transversalement par rapport audit axe principal du servomoteur,
- un premier élément (21) d'indexation du raccord de vide, dont une extrémité (24) est fixée au raccord de vide selon un angle (α) prédéterminé, dont une autre extrémité (25) comporte un orifice (26) qui reçoit une partie d'un élément (20) de fixation du maître cylindre à la paroi,
un jeu (27) existant entre ledit orifice de la patte et ladite partie de l'élément de fixation, ledit jeu permettant une rotation du raccord de vide autour d'un axe (19) de la première buse tubulaire,
**caractérisé en ce qu'**un élément (30) d'indexation fine est inséré entre ledit orifice du premier moyen d'indexation et ladite partie de l'élément de fixation, ledit élément (30) d'indexation fine occupant sensiblement la totalité du jeu permettant la rotation du raccord de vide.

2. Servomoteur selon la revendication 1, **caractérisé en ce que**, dans un plan perpendiculaire à l'axe (17) du servomoteur, l'élément (30) d'indexation fine a une forme circulaire, son rayon (28) étant sensiblement égal à une plus petite dimension (28), dans ledit plan, de l'orifice (26) du premier moyen d'indexation.

3. Servomoteur selon la revendication 1 ou la revendication 2, **caractérisé en ce que** l'orifice (26) du premier moyen d'indexation a une forme circulaire ou oblongue.

4. Servomoteur selon l'une des revendications précédentes, **caractérisé en ce que** l'élément (30) d'indexation fine comporte un orifice (31) dont au moins une partie du bord a une forme complémentaire d'une partie de l'élément (20) de fixation du maître cylindre.

5. Servomoteur selon la revendication 4, **caractérisé en ce que** l'orifice (31) de l'élément d'indexation fine est centré par rapport à un centre d'une face dudit élément d'indexation fine.

6. Servomoteur selon l'une des revendications 4 à 5, **caractérisé en ce que**, dans un plan perpendiculaire à l'axe du servomoteur, l'élément (20) de fixation du maître cylindre a une forme polygonale, complémentaire de la forme de l'orifice (31) de l'élément d'indexation fine.

7. Servomoteur selon l'une des revendications précédentes, **caractérisé en ce que** l'élément (30) d'indexation fine est réalisé en matériau plastique.

8. Procédé de montage d'un servomoteur selon l'une des revendications précédentes, comportant les étapes suivantes :
- insertion de la première buse (16) tubulaire du raccord (13) de vide dans la paroi (7) du servomoteur ;
- adaptation de l'orifice (26) de l'extrémité du premier moyen d'indexation sur un élément (20) de fixation du maître cylindre ;
- après ladite adaptation, insertion d'un élément (30) d'indexation fine entre l'élément de fixation et les bords de l'orifice du premier moyen d'indexation.

## Claims

1. Pneumatic brake booster (1) connected to a vacuum source of a motor vehicle, comprising :
- at least one wall (7),
- a master cylinder (2) passing through the wall (7) and fixed to the said wall by means of at least one fixing element (20),
- a vacuum connector (13) of elbowed shape, comprising a first tubular nozzle (16) and a second tubular nozzle (18),
the first nozzle, directed substantially axially with respect to a main axis (17) of the booster being received in an orifice (14) in the wall (7),
the second nozzle being situated on the outside of the booster, directed substantially transversely with respect to the said main axis of the booster,
- a first element (21) for indexing the vacuum connector, one end (24) of which element is fixed to the vacuum connector at a predetermined angle (α), another end (25) of which comprises an orifice (26) which receives part of an element (20) used to fix the master cylinder to the wall,
there being a clearance (27) between the said orifice in the lug and the said part of the fixing element, the said clearance allowing the vacuum connector to be turned about an axis (19) of the first tubular nozzle, **characterized in that** a fine-indexing element (30) is inserted between the said orifice of the first indexing means and the said part of the fixing element, the said
fine-indexing element (30) occupying practically all of the clearance that allows the vacuum connector to be turned.

2. Booster according to Claim 1, **characterized in that**, in a plane perpendicular to the axis (17) of the booster, the fine-indexing element (30) has a circular shape, its radius (28) being substantially equal to a smallest dimension (28), in the said plane, of the orifice (26) of the first indexing means.

3. Booster according to Claim 1 or Claim 2, **characterized in that** the orifice (26) of the first indexing means is of circular or oblong shape.

4. Booster according to one of the preceding claims, **characterized in that** the fine-indexing element (30) comprises an orifice (31) of which at least part of the edge has a shape that complements a part of the master cylinder fixing element (20).

5. Booster according to Claim 4, **characterized in that** the orifice (31) of the fine-indexing element is centred with respect to a centre of a face of the said fine-indexing element.

6. Booster according to one of Claims 4 to 5, **characterized in that**, in a plane perpendicular to the axis of the booster, the master cylinder fixing element (20) has a polygonal shape that complements the shape of the orifice (31) of the fine-indexing element.

7. Booster according to one of the preceding claims, **characterized in that** the fine-indexing element (30) is made of plastic.

8. Method of fitting a booster according to one of the preceding claims, involving the following steps:
- inserting the first tubular nozzle (16) of the vacuum connector (13) into the wall (7) of the booster;
- fitting the orifice (26) at the end of the first indexing means over a master cylinder fixing element (20);
- after the said fitting, inserting a fine-indexing element (30) between the fixing element and the edges of the orifice of the first indexing means.

## Patentansprüche

1. Pneumatischer Servomotor (1) zur Bremsunterstützung, der mit einer Unterdruckquelle eines Kraftfahrzeugs verbunden ist, wobei er Folgendes aufweist:
- mindestens eine Wand (7),
- einen Hauptzylinder (2), der die Wand (7) durchquert und über mindestens ein Befestigungselement (20) an der Wand befestigt ist,
- einen bogenförmigen Vakuumanschluss (13) mit einer ersten rohrförmigen Düse (16) und einer zweiten rohrförmigen Düse (18),
wobei die erste Düse, die in Bezug auf eine Hauptachse (17) des Servomotors im Wesentlichen axial ausgerichtet ist, in einer Öffnung (14) der Wand (7) aufgenommen ist,
wobei die zweite Düse außerhalb des Servomotors angeordnet und in Bezug auf die Hauptachse des Servomotors im Wesentlichen quer ausgerichtet ist,
- ein erstes Mittel (21) zur Positionierung des Vakuumanschlusses, bei dem ein Ende (24) unter einem vorbestimmten Winkel (α) am Vakuumanschluss befestigt ist und
bei dem ein anderes Ende (25) eine Öffnung (26) aufweist, die einen Abschnitt eines Elements (20) zur Befestigung des Hauptzylinders an der Wand aufnimmt,
wobei zwischen der Öffnung der Lasche und dem Abschnitt des Befestigungselements ein Spiel (27) besteht und das Spiel eine Drehung des Vakuumanschlusses um eine Achse (19) der ersten rohrförmigen Düse gestattet,
**dadurch gekennzeichnet, dass** ein Feinpositionierungselement (30) zwischen der Öffnung des ersten Positionierungsmittels und dem Abschnitt des Befestigungselements eingesetzt ist, wobei das Feinpositionierungselement (30) im Wesentlichen das gesamte Spiel einnimmt, wodurch die Drehung des Vakuumanschlusses gestattet ist.

2. Servomotor nach Anspruch 1, **dadurch gekennzeichnet, dass** das Feinpositionierungselement (30) in einer zur Achse (17) des Servomotors senkrechten Ebene eine Kreisform hat, wobei sein Radius (28) in der Ebene im Wesentlichen einer kleineren Abmessung (28) der Öffnung (26) des ersten Positionierungsmittels entspricht.

3. Servomotor nach Anspruch 1 oder Anspruch 2, **dadurch gekennzeichnet, dass** die Öffnung (26) des ersten Positionierungsmittels eine Kreisform oder eine längliche Form hat.

4. Servomotor nach einem der vorhergehenden Ansprüche, **dadurch gekennzeichnet, dass** das Feinpositionierungselement (30) eine Öffnung (31) aufweist, bei der mindestens ein Teil des Rands eine Form hat, die zu einem Abschnitt des Elements (20) zur Befestigung des Hauptzylinders komplementär ist.

5. Servomotor nach Anspruch 4, **dadurch gekennzeichnet, dass** die Öffnung (31) des Feinpositionierungselements in Bezug auf eine Mitte einer Fläche des Feinpositionierungselements zentriert ist.

6. Servomotor nach einem der Ansprüche 4 bis 5, **dadurch gekennzeichnet, dass** das Element (20) zur Befestigung des Hauptzylinders in einer zur Achse des Servomotors senkrechten Ebene eine polygonale Form hat, die zur Form der Öffnung (31) des Feinpositionierungselements komplementär ist.

7. Servomotor nach einem der vorhergehenden Ansprüche, **dadurch gekennzeichnet, dass** das Feinpositionierungselement (30) aus Kunststoff hergestellt ist.

8. Verfahren zum Anbringen eines Servomotors nach einem der vorhergehenden Ansprüche, wobei das Verfahren folgende Schritte umfasst:
- Einfügen der ersten rohrförmigen Düse (16) des Vakuumanschlusses (13) in die Wand (7) des Servomotors;
- Setzen der Öffnung (26) des Endes des ersten Positionierungsmittels auf ein Element (20) zur Befestigung des Hauptzylinders;
- nach dem Aufsetzen Einfügen eines Feinpositionierungselements (30) zwischen das Befestigungselement und die Ränder der Öffnung des ersten Positionierungsmittels.
